# FASCICULE DE BREVET EUROPEEN

(11) **EP 4 514 615 B1**
(45) Date de publication et mention de la délivrance du brevet: **24.06.2026**
(21) Numéro de dépôt: 23702470.8
(22) Date de dépôt: 02.02.2023
(51) Int. Cl.: B42D 25/324, B42D 25/328, B42D 25/346, B42D 25/351, B42D 25/373, B42D 25/435, B42D 25/45, B42D 25/455, G02B 5/00

(54) **DOCUMENT DE SÉCURITÉ UTILISABLE POUR VISUALISER UNE IMAGE COMPRENANT UN FILM PLASMONIQUE AVEC DES PERFORATIONS**
SICHERHEITSDOKUMENT ZUR VERWENDUNG ZUR ANSICHT EINES BILDES MIT EINEM PLASMONISCHEN FILM MIT PERFORATIONEN
SECURITY DOCUMENT THAT CAN BE USED TO VIEW AN IMAGE COMPRISING A PLASMONIC FILM WITH PERFORATIONS

(30) Priorité: 27.04.2022 FR 2203927
(43) Date de publication de la demande: 05.03.2025
(73) Titulaire: IN Smart Identity France, 92400 Courbevoie (FR)
(72) Inventeur: AZUELOS, Paul, 92400 Courbevoie (FR); BERTHE, Benoît, 92400 Courbevoie (FR); MAZZOLINI, Marie, 92400 Courbevoie (FR); VANDROUX, Coralie, 92400 Courbevoie (FR)
(74) Mandataire: Santarelli
(86) Numéro de dépôt international: PCT/EP2023/052591
(87) Numéro de publication internationale: WO 2023/208429

(56) Documents cités:
- WO-A1-2021/185729

## Description

### Domaine Technique

L'invention se rapporte au domaine des documents de sécurité, et en particulier les documents de sécurité sur lesquels des images sont visibles. L'invention s'applique de manière non exclusive aux documents d'identité physique, tels qu'un passeport, une carte d'identité, un permis de conduire, un permis de séjour, etc.

### Technique antérieure

Le marché de l'identité requiert aujourd'hui des documents d'identité physiques (dits aussi documents identitaires ou documents de sécurité) de plus en plus sécurisés. Ce marché concerne des documents très diverses, tels que cartes d'identité, passeports, badges d'accès, permis de conduire etc., qui peuvent se présenter sous différents formats (cartes, livrets...). En fait, les documents de sécurité doivent pouvoir être authentifiés, même en cas d'évènements imprévisibles tels que des attaques terroristes, où les conditions d'authentification peuvent être difficiles.

Les documents de sécurité doivent donc être authentifiables facilement et rapidement. Ils doivent par ailleurs être difficiles à contrefaire (si possible infalsifiables), et ce face aux dernières techniques de contrefaçon.

Divers types de dispositifs de sécurité peuvent être intégrés à ces documents pour faciliter leur authentification. Par exemple, des marquages, des impressions, des superpositions de couches peuvent être utilisées pour que, lors de l'authentification, il n'y ait pas de doutes sur l'authenticité du document (et a fortiori sur l'identité du porteur de ce document). Ces dispositifs visent en fait à limiter les risques de fraudes, falsification ou contrefaçon.

Pour être authentifiés, ces dispositifs doivent pouvoir être observés par un opérateur ou par un capteur d'une caméra qui délivre des images traitées automatiquement (par exemple par un modèle obtenu par apprentissage automatisé). En fait, l'utilisation de systèmes automatisés permet d'éviter les erreurs d'appréciation humaines, et permet par ailleurs de mettre en œuvre une authentification à distance. L'authentification à distance est une technique particulièrement utile pour les transactions en ligne qui demandent une authentification. De ce fait, il existe un besoin pour des dispositifs de sécurité optiques/visibles qui doivent être à la fois authentifiables par des humains et par des machines.

WO 2021/185729 A1 décrit un document de sécurité utilisable pour visualiser une image, comprenant un film plasmonique comprenant une première face visible au sein du document etprésentant un effet plasmonique sur la première face, le film plasmonique comprenant des perforations. WO 2021/185729 A1 ne décrit pas qu'en plus du film plasmonique, le document comprend des perforations du film plasmonique.

Les solutions actuelles ne sont pas toujours satisfaisantes, tant au niveau de la facilité d'authentification qu'au niveau de la protection contre la falsification.

Il existe un besoin pour des documents de sécurité authentifiables rapidement, dans des situations variées.

### Exposé de l'invention

A cet effet, la présente invention concerne un document de sécurité utilisable pour visualiser une image, comprenant un film plasmonique comprenant une première face visible au sein du document et présentant un effet plasmonique sur la première face, et un motif comprenant des perforations du film plasmonique, le motif définissant l'image qui est visualisée lorsque le document de sécurité est éclairé.

En fait, on connait maintenant des films plasmoniques, c'est-à-dire des films avec au moins une surface présentant un effet plasmonique, qui réfléchissent ou transmettent une lumière avec un effet coloré (un film fin peut transmettre une lumière colorée s'il est éclairé avec une lumière blanche, et un film épais peut réfléchir une lumière colorée s'il est éclairé avec une lumière blanche).

Un film plasmonique comporte, de manière connue, une couche métallique nano-texturée (avec des motifs ayant des dimensions de l'ordre du nanomètre) et un ensemble d'une ou de plusieurs couches diélectriques en contact avec la nano-texturation. L'effet plasmonique fait intervenir le phénomène de plasmon de surface, qui est un phénomène différent du phénomène de diffraction. Le phénomène de résonance plasmonique induit notamment un phénomène d'absorption sur une petite plage de longueur d'onde choisit dans la gamme du visible. Cela se traduit par la réflexion et/ou la transmission d'une couleur substractive (par exemple on peut générer du cyan en absorbant la gamme de longueur d'onde du rouge à l'aide d'un phénomène plasmonique).

Le document WO 2020 229415 décrit des films plasmoniques connus.

Les inventeurs de la présente invention ont observé qu'il est possible de réaliser des perforations qui traversent les films plasmoniques. En formant plusieurs perforations, lorsque l'on éclaire le document pour obtenir l'effet plasmonique (en éclairant au moins la première face du film), on verra apparaitre une image colorée par l'effet plasmonique, mais qui est définie par les perforations. L'observation peut se faire en réflexion ou en transmission.

En fait, un film plasmonique fin transmet la lumière avec un effet sur la couleur transmise, de sorte que l'image observée sera visible avec du blanc à l'emplacement des perforations et de la couleur obtenue par effet plasmonique ailleurs. Ce cas correspond à une observation du document et du film du côté opposé à la première face.

On notera que dans la présente description, une perforation d'un film plasmonique est un orifice traversant d'au moins la couche métallique nano-texturée. La perforation peut éventuellement comprendre une perforation complète ou partielle (par exemple une dégradation) de la ou des couches diélectriques du film plasmonique (la dégradation des couches diélectriques peut résulter de leur matériau et d'une longueur d'onde d'un laser utilisé pour réaliser la perforation du film plasmonique).

En perforant au moins la couche métallique nano-texturée, on obtient une bonne transmission locale et l'on stoppe localement l'effet plasmonique.

Un film plasmonique plus épais réfléchit de la lumière avec un effet sur la couleur réfléchie, de sorte que l'image observée sera visible avec du noir (ou à tout le moins une intensité lumineuse plus faible que là où la lumière est réfléchie) là où sont les perforations, et de la couleur obtenue par effet plasmonique ailleurs. Ce cas correspond à une observation du document et du film du côté de la première face.

L'image est en fait une image dite au trait, ou monochrome, ou binaire.

Aussi, à titre indicatif, l'image peut être propre au porteur du document. Par exemple, l'image peut représenter le visage du porteur du document, ou comporter du texte avec des informations personnelles propres au porteur du document.

On notera que dans la présente demande, par éclairer, on entend éclairer avec une source de rayonnement, par exemple une source de lumière artificielle. Cette source de lumière peut être une source de lumière visible, par exemple une source de lumière blanche, mais elle peut également être une source émettant un rayonnement tel qu'un rayonnement UV (on utilisera un rayonnement UV pour les films plasmoniques qui réagissent aux UV).

Il apparait donc que la couleur, qui résulte de l'effet plasmonique, est un moyen simple d'authentifier le document, lorsqu'on la voit colorer l'image au moyen de l'éclairage.

Selon un mode de réalisation particulier, le film plasmonique comprend une deuxième face opposée à la première face et présentant un effet plasmonique sur la deuxième face, la deuxième face étant visible au sein du document.

Dans ce mode de réalisation particulier, le film plasmonique est un film à deux faces toutes deux présentant un effet plasmonique lorsqu'elles sont éclairées. Un effet plus complexe à reproduire est ainsi obtenu.

On notera que lorsque l'on observe la deuxième face, l'image apparait inversée par rapport à une observation du côté de la première face, mais elle apparaît également en négatif (les perforations laissent passer la lumière).

Selon un mode de réalisation particulier, l'effet plasmonique présenté par la deuxième face diffère de l'effet plasmonique présenté par la première face.

Dans ce mode de réalisation particulier, on peut donc observer, par exemple en réflexion, une première couleur réfléchie du côté de la première face, et une deuxième couleur réfléchie du côté de la deuxième face (lorsque l'on observe la deuxième face).

Selon un mode de réalisation particulier, le film plasmonique présente en transmission, un couplage entre l'effet plasmonique de la première face et l'effet plasmonique de la deuxième face.

Du document WO 2020 229415, on connaît les films plasmoniques comprenant une couche métallique nano-texturée dont une face présente un premier effet plasmonique, dont la deuxième face présente un deuxième effet plasmonique, et dont l'épaisseur est suffisamment fine pour qu'un couplage se produise entre les deux effets plasmoniques (ce document parle de couplages de modes de plasmon). Cela permet d'avoir une couleur en transmission qui n'est pas celle qui résulte du premier effet plasmonique (qui serait observée en transmission si le film n'avait que la première face nano-texturée) ou du deuxième effet plasmonique (qui serait observée si le film n'avait que la deuxième face nano-texturée), mais une autre couleur.

L'utilisation d'un film à couplage rend encore plus difficile la reproduction du document, qui ne peut pas être réalisée sans la connaissance de la présence de cet effet.

Selon un mode de réalisation particulier, la couche métallique du film plasmonique a une épaisseur inférieure à 300 nanomètres.

Les films plasmoniques avec une couche métallique ayant une épaisseur supérieure à 300 nanomètres ne vont pas permettre la transmission de la lumière.

Selon un mode de réalisation particulier, le film plasmonique ne présente pas, en transmission, un couplage entre l'effet plasmonique de la première face et l'effet plasmonique de la deuxième face.

Dans ce cas, le film plasmonique peut être trop épais pour qu'un couplage n'apparaisse, et il peut éventuellement ne fonctionner qu'en réflexion.

Selon un mode de réalisation particulier, le film plasmonique est laminé entre deux couches transparentes.

Ces couches transparentes, par exemple des couches de polymère (éventuellement du polycarbonate) peuvent servir de couches de protection mécanique, et elles n'affectent pas l'effet plasmonique puisqu'elles sont transparentes.

Selon un mode de réalisation particulier, le film plasmonique comporte une ou plusieurs tranchées traversantes (c'est-à-dire des tranchées qui traversent à la fois la couche métallique et la ou les couches diélectriques ; tout le film est traversé).

Lorsque le film est laminé entre deux couches transparentes, la présence d'une tranchée traversante va permettre à la matière des couches transparentes de fluer dans la tranchée, ce qui crée un pont entre les deux couches et une zone de très forte adhésion.

Un tiers mal intentionné qui chercherait à délaminer le document de sécurité pour récupérer le film plasmonique ne pourrait alors pas réussir sans détruire le film.

On peut noter que la lamination peut être faite entre d'une part une couche transparente, et d'autre part une couche transparente sur laquelle le film plasmonique a été transféré à chaud (« hot stamping » en anglais).

Selon un mode de réalisation particulier, les tranchées traversantes sont agencées selon un motif de grille et forment un quadrillage du premier film plasmonique.

Ce motif en forme de grille rend encore plus difficile la délamination du document de sécurité.

Selon un mode de réalisation particulier, le document comporte un support opaque muni d'une fenêtre transparente au niveau de laquelle le film plasmonique est agencé.

L'utilisation d'une fenêtre transparente est particulièrement bien adaptée pour recevoir le film plasmonique et faciliter son éclairage, pour un fonctionnement en réflexion ou en transmission. Cela facilite l'authentification des documents de sécurité.

La fenêtre est ici alignée avec le film plasmonique, qui peut également être intégré à la fenêtre.

Selon un mode de réalisation particulier, les perforations du motif ont toutes un diamètre identique ou des diamètres différents (pour au moins deux perforations).

Les perforations ayant toutes un diamètre identique peuvent être plus ou moins rapprochées pour former des zones sombres en réflexion ou des zones claires en transmission. Cette technique de formation d'image, connue sous le nom de diffusion d'erreur (« dithering » en anglais), permet de former des images binaires.

Les perforations qui ont des diamètres différents permettent de former une image avec des perforations plus grandes pour les zones sombres de l'image (en reflexion), ou des zones claires en transmission.

L'invention propose également un procédé de visualisation d'une image utilisant un document de sécurité tel que défini ci avant dans tous ses modes de réalisation, dans lequel on éclaire le document de sécurité.

Cette étape peut comporter l'utilisation d'une source de lumière artificielle pour éclairer la face du document depuis laquelle la première face est visible, et une observation de cette première face ou de la face opposée (du document et du film). La source de lumière artificielle peut émettre un rayonnement visible (typiquement une lumière blanche) ou encore un rayonnement invisible (par exemple de type UV).

Selon un mode de réalisation particulier, on éclaire la première face visible du film plasmonique et l'on observe l'image par réflexion depuis le coté de la première face visible, ou l'on observe l'image par transmission depuis le côté opposé à la première face visible.

L'invention propose également un procédé de fabrication d'un document de sécurité tel que défini ci-avant dans tous ses modes de réalisation, dans lequel on perfore le film plasmonique pour former le motif.

Selon un mode de mise en œuvre particulier, le procédé comprend un transfert à chaud du film plasmonique sur une couche transparente du document.

Cette étape peut être suivie d'une lamination du film plasmonique et de la couche transparente avec une autre couche transparente du document.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement un document de sécurité selon un exemple;
[Fig. 2] La figure 2 est une illustration du document de la figure 1 lorsqu'il est éclairé;
[Fig. 3] La figure 3 est une vue en coupe montrant le film plasmonique avant lamination;
[Fig. 4] La figure 4 est une vue en coupe montrant le film plasmonique après lamination;
[Fig. 5] La figure 5 est une vue en coupe du document de la figure 1;
[Fig. 6] La figure 6 est une vue en coupe d'un document de sécurité selon un autre exemple;
[Fig. 7] La figure 7 est une illustration du document de la figure 6 lorsqu'il est éclairé;
[Fig. 8] La figure 8 est une vue en coupe d'un document de sécurité selon un autre exemple;
[Fig. 9] La figure 9 est une illustration du document de la figure 8 lorsqu'il est éclairé;
[Fig. 10] La figure 10 est une autre illustration du document de la figure 8 lorsqu'il est éclairé;
[Fig. 11] La figure 11 est une vue en coupe d'un document de sécurité selon un autre exemple;
[Fig. 12] La figure 12 est une vue en coupe d'un document de sécurité selon un autre exemple;
[Fig. 13] La figure 13 est une vue en coupe d'un document de sécurité selon un autre exemple; et
[Fig. 14] La figure 14 montre plus en détail les tranchées de la figure 13.

### Description des modes de réalisation

On va maintenant décrire des documents de sécurité comprenant des films plasmoniques visibles, qui permettent de visualiser des images. Lorsque ces films plasmoniques sont éclairés, les images, qui sont définies par des perforations formées dans les films plasmoniques, apparaissent colorées. Sans éclairage supplémentaire (sans source de lumière artificielle dirigée vers la face visible du film plasmonique) l'image apparait avec un aspect métallique.

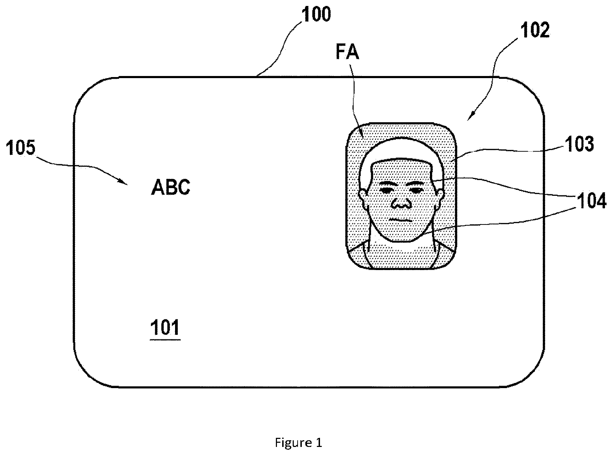

Sur la figure 1, on a représenté un document de sécurité 100, par exemple un document de type passeport, carte d'identité, permis de conduire, etc. En fait, ce document est ici un document propre à un porteur, un utilisateur, et il comporte de ce fait et comme cela sera décrit ci-après des informations propres au porteur.

Ici, le document de sécurité 100 comporte un support opaque 101, par exemple mais non exclusivement un support en polycarbonate (par exemple du polycarbonate blanc). Ce support comporte une fenêtre transparente au sein de laquelle un film plasmonique 102 est agencé, de sorte qu'une première face FA soit visible sur la figure 1 au sein du document.

Le film plasmonique comporte, d'une manière connue en soi (en particulier, le document WO 2020 229415 décrit de tels films), une couche métallique avec une surface nano-texturée, et une couche diélectrique. Sur la figure, la référence 103 indique la surface nano-structurée, qui présente donc un effet plasmonique.

Par exemple, présenter un effet plasmonique peut signifier que lorsque la face qui présente cet effet est éclairée par une source de lumière artificielle (ou un autre rayonnement) sous incidence normale (sensiblement 90°), à l'œil nu (ou sur une caméra numérique), on peut observer un filtrage de la couleur et donc l'apparition d'une teinte (qui ne correspond pas, du fait du filtrage, à la lumière de la source de lumière ou au rayonnement). Sans cet éclairage, et typiquement avec un éclairage ambiant, on observe une réflexion de type métallique.

Le film plasmonique 102 comporte ici des perforations 104 qui dessinent un visage. Lorsque le document de sécurité est éclairé du côté de la première face FA, le visage apparait coloré. En fait, les perforations vont apparaître comme sombres, du fait de l'absence d'un éclairage de l'autre côté de la face FA autre que l'éclairage ambiant.

On notera qu'ici le visage du porteur du document de sécurité 100 est l'image qui apparait coloré par l'effet plasmonique. Le document de sécurité 100 comporte par ailleurs des informations propres au porteur imprimées dans une zone 105 du support 101. Typiquement, ces informations sont des informations personnelles (nom, prénom, date de naissance, etc.).

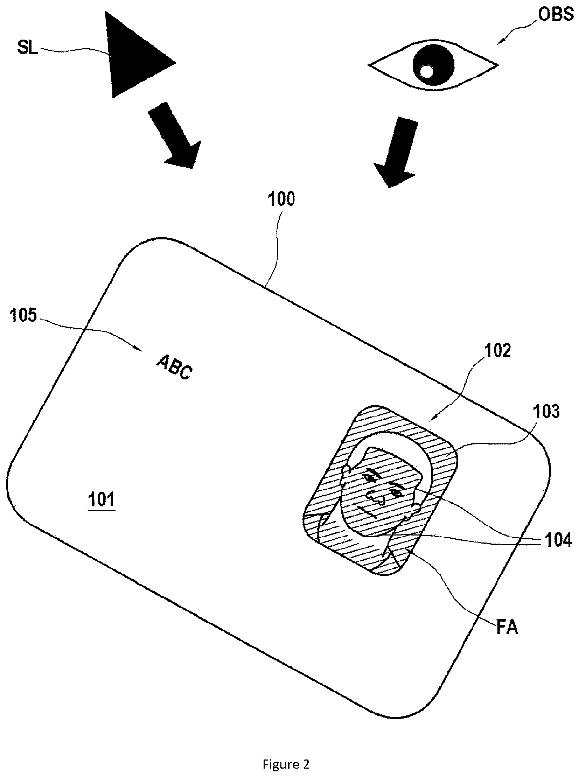

La figure 2 montre comment le dispositif de sécurité 100 décrit en référence à la figure 1 est utilisé.

Le document de sécurité 100 est éclairé au moyen d'une source lumineuse SL, qui produit un rayonnement lumineux ayant une incidence sensiblement normale par rapport à la face visible FA du film plasmonique 102. Un observateur OBS (humain ou caméra) peut observer le document de sécurité 100 (ici sa face sur laquelle la face FA est visible) également avec une incidence sensiblement normale, de sorte que l'image du visage apparait colorée.

On va maintenant décrire des étapes mises en œuvre pour fabriquer le dispositif 100 tel que décrit en référence aux figures 1 et 2. Ces étapes peuvent être adaptées pour la fabrication des autres exemples de documents de sécurité qui seront décrits ci-après.

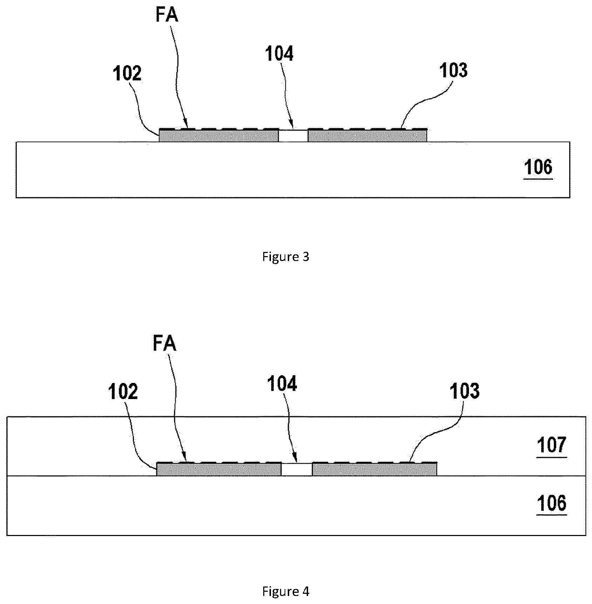

Dans une première étape visible sur la figure 3, on obtient un film plasmonique 102 muni d'une première face FA qui présente un effet plasmonique (avec une surface nano-texturée 103). Ce film est tout d'abord assemblé par transfert à chaud sur une couche transparente 106, typiquement une couche de polymère.

On forme ensuite des perforations 104 à travers le film plasmonique 102, c'est-à-dire des perforations qui le traversent. La réalisation des perforations peut être réalisée, par exemple, au cours d'une étape de perforation par laser.

Dans cette étape, on peut appliquer un faisceau laser sur le film plasmonique pour former des perforations d'au moins une couche métallique du film plasmonique et balayer ce film pour définir l'image. L'utilisation d'un faisceau laser est particulièrement intéressante parce qu'elle permet de délivrer facilement des dispositifs de sécurité personnalisés (on utilise ce faisceau laser lors d'une étape de personnalisation), car l'application du faisceau laser peut se faire selon des trajets différents entre deux dispositifs de sécurité pour former des motifs différents et donc des images différentes, par exemples chacune propres au porteur du document.

Le laser peut être un laser YAG (par exemple à une longueur d'onde de 1064 nm), un laser bleu, un laser UV, etc. On peut par ailleurs appliquer le faisceau à une fréquence d'impulsion comprise entre 1 kHz et 100 kHz, bien que d'autres configurations soient envisageables. Le faisceau est appliqué par balayage. Et l'on choisira le laser en fonction des matériaux à perforer et en particulier en fonction de la couche métallique du film plasmonique.

Une lamination est ensuite mise en œuvre, comme illustré sur la figure 4, ou une couche de protection transparente 107 a été assemblée au-dessus de la couche 106 et du film plasmonique 102.

L'ensemble formé en référence à la figure 4 est ensuite assemblé sur un support 101 muni d'une fenêtre transparente 108, de sorte que le film plasmonique est agencé au niveau de la fenêtre 108. Ici, le film plasmonique est agencé en regard de la fenêtre 108, il est aligné avec la fenêtre 108. L'assemblage du support avec l'ensemble comprenant le film plasmonique102 et les couches de protection 106 et 107 peut être réalisé au moyen d'une lamination. En outre, une couche de protection transparente supplémentaire 109 est assemblée avec le support, du côté opposé à celui où est situé le film plasmonique.

Dans la configuration représentée ici, avec la fenêtre au niveau du film plasmonique, on peut noter que l'image sera visible du côté opposé à la face FA, mais en négatif, lorsqu'un éclairage est utilisé comme sur la figure 2. En fait, les perforations laisseront passer la lumière. La transmission de la lumière, colorée par l'effet plasmonique, dépend cependant de l'épaisseur du film plasmonique 102.

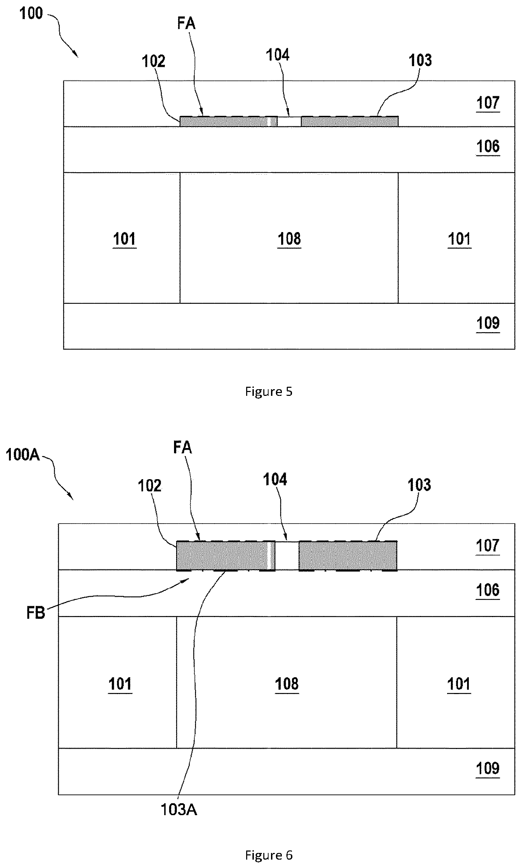

On va maintenant décrire un document de sécurité avec un film plasmonique qui ne laisse pas passer la lumière, en référence à la figure 6. Les références utilisées pour les figures 1 à 5 sont réutilisées pour désigner les mêmes éléments. Lorsqu'un élément a sa forme ou sa structure changée, une lettre peut être ajoutée après sa référence numérique. Ces observations sur les références s'appliquent à toute la présente description.

Ainsi, sur la figure 6, on a représenté une vue en coupe d'un dispositif 100A dans lequel un film plasmonique 102A a une couche métallique ayant une épaisseur par exemple supérieure à 300 nanomètres, ce qui a pour effet d'empêcher la transmission de la lumière entre la première face FA du film plasmonique et la deuxième face FB qui est opposée à la première face. Aussi, cette épaisseur empêche tout couplage entre l'effet plasmonique présenté par la première face FA et l'effet plasmonique présenté par la deuxième face FB.

Au niveau de la deuxième face FB, un effet plasmonique différent de celui présenté au niveau de la première face FA est visible. Cela résulte d'une nano-texturation 103A de la face FB qui diffère de la nano-texturation 103 de la face FA. On peut noter que des documents de sécurité avec des films plasmoniques épais (avec au moins la couche métallique épaisse) tels que le film plasmonique 102A mais qui n'ont pas de nano-texturation au niveau de la deuxième face sont également concevable, l'invention n'étant pas limitée sur ce point.

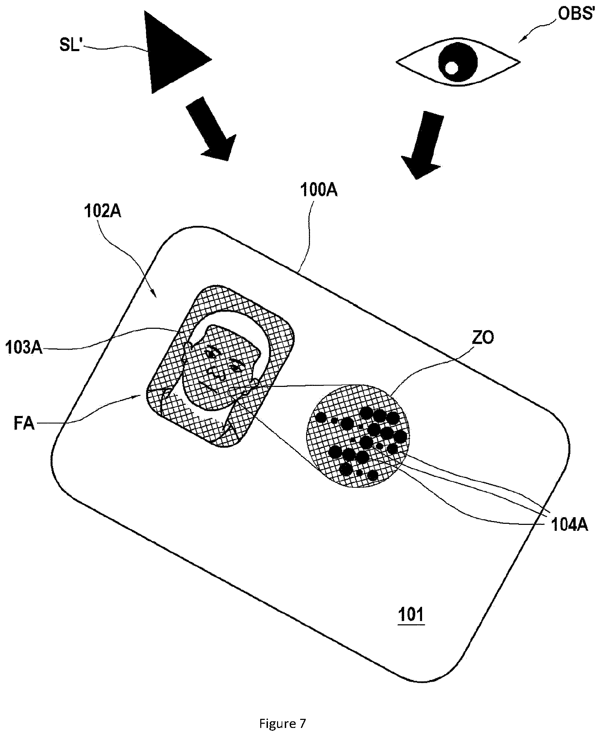

La figure 7 montre l'utilisation du document 100A, lorsque la source de lumière éclaire le document de sécurité comme décrit en référence à la figure 2 (du côté de la première face FA), mais lorsque la source de lumière SL' et l'observateur OBS' sont positionnés de l'autre côté du document de sécurité 100A : le côté sur lequel la deuxième face FB est visible. L'observateur OBS' voit l'image colorée par l'effet plasmonique résultant de la nano-texturation 103A. On peut noter que la nano-texturation 103A diffère de la nano-texturation 103. Cela étant, il est également envisageable d'utiliser la même nano-texturation pour les deux faces.

On peut noter que du fait de l'épaisseur de la couche métallique du film plasmonique 102A, il n'y a aucun couplage entre les deux faces.

Sur la figure 7, on a représenté un agrandissement ZO des perforations 104A. Cet agrandissement montre des perforations qui peuvent être réalisées dans tous les exemples décrits ici. En fait, ces perforations 104A sont de taille variable, ce qui permet de réaliser une image qui semble être en niveau de gris (sans tenir compte de la coloration résultant de l'effet plasmonique alors qu'il s'agit d'une image binaire). De manière alternative, on peut également réaliser des perforations qui ont toutes la même taille, les niveaux de gris s'obtenant en faisant varier la densité des perforations.

Le passage d'une image numérique à un ensemble de perforations pourra être fait en transformant, par un traitement informatique d'image, une image numérique en une image binaire définie par des perforations de taille variable ou de taille uniforme.

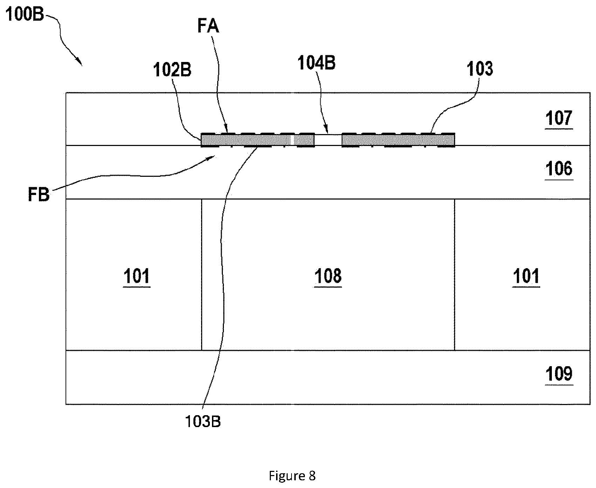

La figure 8 montre un autre document de sécurité 100B, qui diffère de celui de la figure 6 en ce que l'épaisseur de la couche métallique du film plasmonique 102B est plus fine (inférieure à 300 nm), de sorte que les nano-texturations 103B et 103 présentent un couplage, ici en réflexion et en transmission (on peut noter qu'en réflexion, on a bien un effet de couplage du fait d'une bande d'absorption générée par l'excitation du plasmon du côté de la deuxième face FB). Aussi, la transmission de lumière est possible entre la première face FA et la deuxième face FB du film plasmonique 102B, avec le couplage.

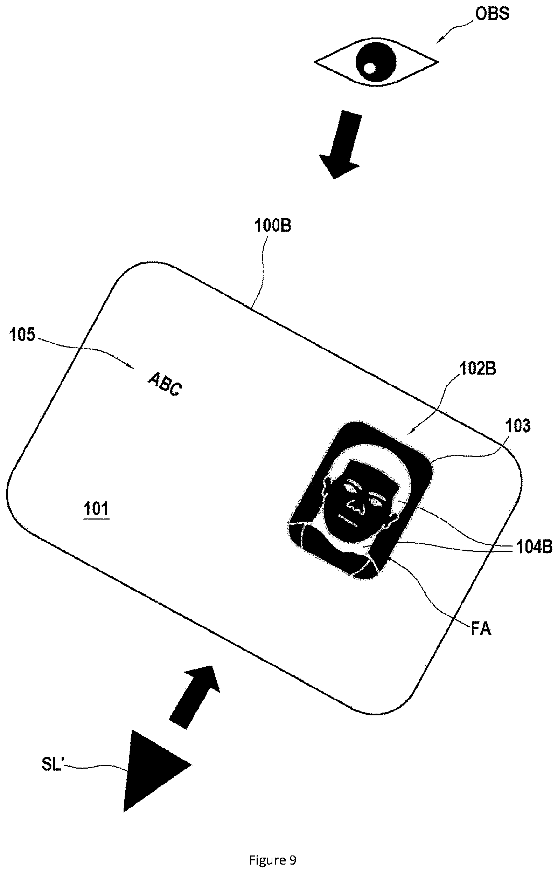

La figure 9 montre l'utilisation du document de sécurité 100B en transmission, avec la première face FA visible et l'observateur OBS de la figure 2. Par contre, la source de lumière est placée du côté de la deuxième face FB.

Du fait du couplage, l'image définie par les perforations 104B apparait à l'observateur avec une autre coloration que celle obtenue sur les figures 2 et 7 (les zones noires sur la figure autour des traits du visage apparaissent d'une couleur qui dépend du couplage).

Aussi, les perforations 104B apparaissent ici comme laissant passer la lumière (les zones blanches des traits du visage correspondent au passage de la lumière dans les perforations). Cela implique que si l'on utilise un même motif de perforation pour le dispositif 100 et le dispositif 100B, en utilisation comme illustré sur la figure 9, on a une image qui apparait en négatif, ou inversement. Les parties sombres sur le dispositif 100 utilisé comme sur la figure 2 sont ici claires, du fait du passage de la lumière à travers les perforations 104B.

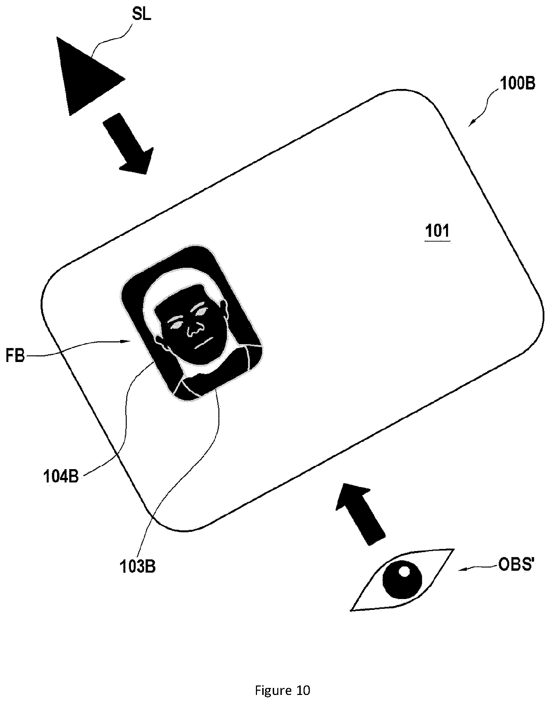

La figure 10 montre une utilisation du document de sécurité en transmission également, avec la deuxième face FB visible pour l'observateur OBS' et la source de lumière SL qui éclaire la première face FA. On observe la même image que pour la figure 9, inversée géométriquement. La coloration est la même que celle de la figure 9 et résulte toujours du couplage.

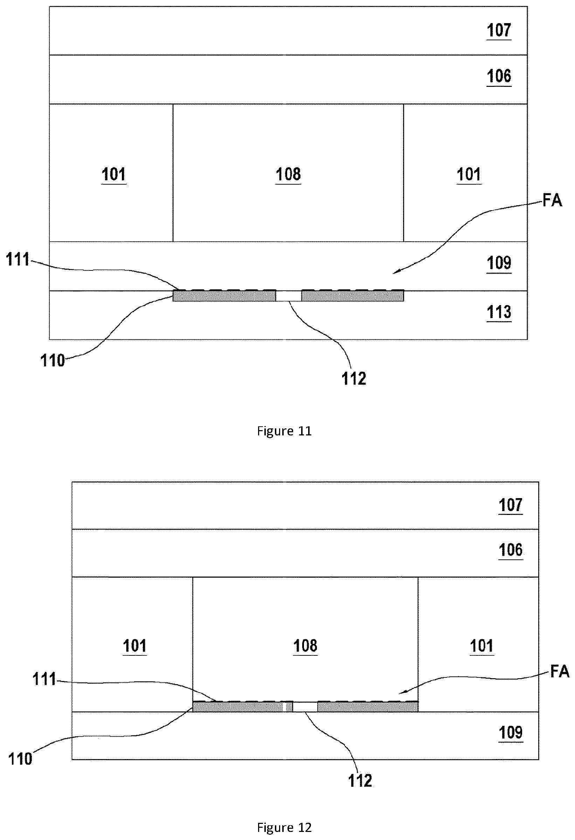

La figure 11 montre un autre exemple de document de sécurité 100C qui comporte un film plasmonique 110 qui n'est pas agencé comme le film plasmonique 104 décrit en référence à la figure 5.

Le film plasmonique 110 a été assemblé par transfert à chaud, par exemple sur une couche de protection 113 avant lamination avec la couche de protection 109.

Ce film plasmonique 110 comporte une première face FA avec une nano-texturation 111, par exemple identique ou différente de la nano-texturation 103 décrite ci-avant (de ce fait, l'effet plasmonique peut être identique ou différent). Aussi, on a formé des perforations 112 identiques aux perforations 104 du film plasmonique 102 : le même motif y a été formé.

On pourra donc placer le film plasmonique à différentes interfaces.

La figure 12 montre un agencement alternatif pour le film plasmonique 110, qui est à l'interface entre la couche de protection 109 et la fenêtre 108.

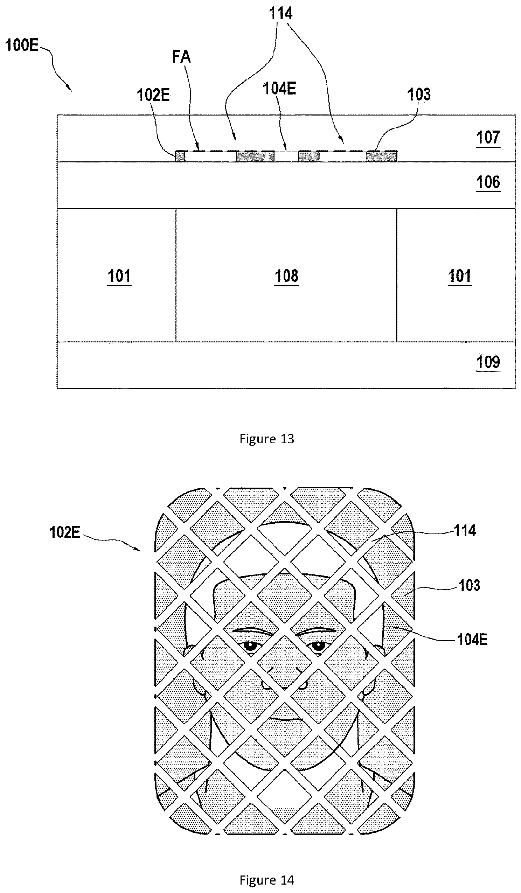

La figure 13 présente encore un autre exemple de document de sécurité 100E, équipé d'un film plasmonique 102E analogue à celui du dispositif des figures 1 à 5, sauf en ce que des tranchées 114 sont agencées de manière à traverser le film plasmonique 102E.

Les perforations 104E ne traversent qu'au moins la couche métallique du film plasmonique 102E (cela n'est pas visible sur la figure pour des raisons de simplicité). Ce n'est pas le cas pour les tranchées 114 qui traversent tout le film plasmonique. Par ailleurs, les tranchées 114 ont des dimensions bien supérieures à celles des perforations 104E (la largeur sur la figure).

La figure 13 présente l'agencement des tranchées 114, selon un motif de grille, de sortent qu'elles forment un quadrillage du film plasmonique.

Lors des étapes de lamination, la matière des couches de protection va fluer à travers ces tranchées, pour augmenter l'adhésion entre les couches de protection et empêcher la délamination du document. En fait, cela empêche un tiers mal intentionné de chercher à récupérer le film plasmonique pour fabriquer un document frauduleux.

On peut noter que si le document de sécurité comporte plusieurs films plasmoniques, tous peuvent être quadrillés par des tranchées.

Un homme du métier comprendra que les modes de réalisation et variantes décrits ci-avant ne constituent que des exemples non limitatifs de mise en œuvre de l'invention, qui est définie par les revendications ci-après.

## Revendications

1. Document (100, 100B, 100C, 100E) de sécurité utilisable pour visualiser une image,
comprenant un film plasmonique (102, 103, 102A, 103A, 102B, 103B, 102E) comprenant une première face (FA) visible au sein du
document et présentant un effet plasmonique sur la première face, et un motif comprenant des perforations (104, 104B, 112, 104E) du film plasmonique, le motif définissant l'image qui est
visualisée lorsque le document de sécurité est éclairé.

2. Document selon la revendication 1, dans lequel le film plasmonique comprend une deuxième face (FB) opposée à la première face et présentant un effet plasmonique sur la deuxième face, la deuxième face étant visible au sein du document.

3. Document selon la revendication 2, dans lequel l'effet plasmonique présenté par la deuxième face diffère de l'effet plasmonique présenté par la première face.

4. Document selon la revendication 2 ou 3, dans lequel le film plasmonique présente en transmission, un couplage entre l'effet plasmonique de la première face et l'effet plasmonique de la deuxième face.

5. Document selon la revendication 2 ou 3, dans lequel le film plasmonique ne présente pas, en transmission, un couplage entre l'effet plasmonique de la première face et l'effet plasmonique de la deuxième face.

6. Document selon l'une quelconque des revendications 1 à 5, dans lequel le premier film plasmonique est laminé entre deux couches transparentes (106, 107).

7. Document selon la revendication 6, dans lequel le film plasmonique comporte une ou plusieurs tranchées (114) traversantes.

8. Document selon la revendication 7, dans lequel les tranchées traversantes sont agencées selon un motif de grille et forment un quadrillage du premier film plasmonique.

9. Document selon l'une quelconque des revendications 1 à 8, dans lequel le document comporte un support opaque (101) muni d'une fenêtre transparente (108) au niveau de laquelle le film plasmonique est agencé.

10. Document selon l'une quelconque des revendications 1 à 9, dans lequel les perforations du motif ont toutes un diamètre identique ou des diamètres différents.

11. Procédé de visualisation d'une image utilisant un document de sécurité selon l'une quelconque des revendications 1 à 10, dans lequel on éclaire le document de sécurité.

12. Procédé selon la revendication 11, dans lequel on éclaire la première face visible du film plasmonique et l'on observe l'image par réflexion depuis le coté de la première face visible, ou l'on observe l'image par transmission depuis le côté opposé à la première face visible.

13. Procédé de fabrication d'un document de sécurité selon l'une quelconque des revendications 1 à 10, dans lequel on perfore le film plasmonique pour former le motif.

14. Procédé selon la revendication 13, comprenant un transfert à chaud du film plasmonique sur une couche transparente (106) du document.

## Patentansprüche

1. Sicherheitsdokument (100, 100B, 100C, 100E) zur Bilddarstellung verwendbar, umfassend einen Plasmonenfilm (102, 103, 102A, 103A, 102B, 103B, 102E), der eine erste Seite (FA) umfasst, die innerhalb des Dokuments sichtbar ist und einen Plasmoneneffekt auf der ersten Seite aufweist, und ein Muster, das Perforationen (104, 104B, 112, 104E) des Plasmonenfilms umfasst, wobei das Muster das Bild definiert, das dargestellt wird, wenn das Sicherheitsdokument beleuchtet wird.

2. Dokument nach Anspruch 1, wobei der Plasmonenfilm eine zweite Seite (FB) umfasst, die der ersten Seite gegenübersteht und einen Plasmoneneffekt auf der zweiten Seite aufweist, wobei die zweite Seite innerhalb des Dokuments sichtbar ist.

3. Dokument nach Anspruch 2, wobei sich der von der zweiten Seite aufgewiesene Plasmoneneffekt von dem von der ersten Seite aufgewiesenen Plasmoneneffekt unterscheidet.

4. Dokument nach Anspruch 2 oder 3, wobei der Plasmonenfilm bei der Übertragung eine Kopplung zwischen dem Plasmoneneffekt der ersten Seite und dem Plasmoneneffekt der zweiten Seite aufweist.

5. Dokument nach Anspruch 2 oder 3, wobei der Plasmonenfilm bei der Übertragung keine Kopplung zwischen dem Plasmoneneffekt der ersten Seite und dem Plasmoneneffekt der zweiten Seite aufweist.

6. Dokument nach einem der Ansprüche 1 bis 5, wobei der erste Plasmonenfilm zwischen zwei transparenten Schichten (106, 107) laminiert ist.

7. Dokument nach Anspruch 6, wobei der Plasmonenfilm einen oder mehrere durchgehende Schlitze (114) aufweist.

8. Dokument nach Anspruch 7, wobei die durchgehenden Schlitze nach einem Gittermuster angeordnet sind und ein Raster des ersten Plasmonenfilms bilden.

9. Dokument nach einem der Ansprüche 1 bis 8, wobei das Dokument einen undurchsichtigen Träger (101) aufweist, der mit einem transparenten Fenster (108) versehen ist, an dem der Plasmonenfilm angeordnet ist.

10. Dokument nach einem der Ansprüche 1 bis 9, wobei die Perforationen des Musters alle den gleichen Durchmesser oder unterschiedliche Durchmesser haben.

11. Verfahren zur Darstellung eines Bildes unter Verwendung eines Sicherheitsdokuments nach einem der Ansprüche 1 bis 10, bei dem das Sicherheitsdokument beleuchtet wird.

12. Verfahren nach Anspruch 11, wobei die erste sichtbare Seite des Plasmonenfilms beleuchtet und das Bild durch Reflexion von der Seite der ersten sichtbaren Seite beobachtet wird, oder das Bild durch Übertragung von der der ersten sichtbaren Seite gegenüberliegenden Seite beobachtet wird.

13. Verfahren zur Herstellung eines Sicherheitsdokuments nach einem der Ansprüche 1 bis 10, wobei der Plasmonenfilm zur Bildung des Musters perforiert wird.

14. Verfahren nach Anspruch 13, umfassend das Warmtransferieren des Plasmonenfilms auf eine transparente Schicht (106) des Dokuments.

## Claims

1. A security document (100, 100B, 100C, 100E) usable to view an image, comprising a plasmonic film (102, 103, 102A, 103A, 102B, 103B, 102E) comprising a first face (FA) visible within the document and exhibiting a plasmonic effect on the first face, and a pattern comprising perforations (104, 104B, 112, 104E) of the plasmonic film, the pattern defining the image that is viewed when the security document is illuminated.

2. The document according to claim 1, wherein the plasmonic film comprises a second face (FB) opposite to the first face and exhibiting a plasmonic effect on the second face, the second face being visible within the document.

3. The document according to claim 2, wherein the plasmonic effect exhibited by the second face differs from the plasmonic effect exhibited by the first face.

4. The document according to claim 2 or 3, wherein the plasmonic film exhibits in transmission, a coupling between the plasmonic effect of the first face and the plasmonic effect of the second face.

5. The document according to claim 2 or 3, wherein the plasmonic film does not exhibit, in transmission, a coupling between the plasmonic effect of the first face and the plasmonic effect of the second face.

6. The document according to any one of claims 1 to 5, wherein the first plasmonic film is laminated between two transparent layers (106, 107).

7. The document according to claim 6, wherein the plasmonic film comprises one or more through trench(es) (114).

8. The document according to claim 7, wherein the through trenches are arranged according to a grid-like pattern and form a gridding of the first plasmonic film.

9. The document according to any one of claims 1 to 8, wherein the document comprises an opaque support (101) provided with a transparent window (108) at which the plasmonic film is arranged.

10. The document according to any one of claims 1 to 9, wherein the perforations of the pattern all have an identical diameter or different diameters.

11. A method for viewing an image using a security document according to any one of claims 1 to 10, wherein the security document is illuminated.

12. The method according to claim 11, wherein the first visible face of the plasmonic film is illuminated and the image is observed by reflection from the side of the first visible face, or the image is observed by transmission from the side opposite to the first visible face.

13. A method for manufacturing a security document according to any one of claims 1 to 10, wherein the plasmonic film is perforated so as to form the pattern.

14. The method according to claim 13, comprising hot transferring the plasmonic film onto a transparent layer (106) of the document.
